# EUROPEAN PATENT APPLICATION

(11) **EP 4 256 956 A1**
(43) Date of publication of application: **11.10.2023**
(21) Application number: 23166828.6
(22) Date of filing: 05.04.2023
(51) Int. Cl.: A01K 63/06

(54) **AN ENVIRONMENTAL CONTROL DEVICE FOR AQUARIUMS AND RELATED ENVIRONMENTAL CONTROL SYSTEM**

(30) Priority: 05.04.2022 IT 202200006713
(71) Applicant: Sicce S.r.l., 36050 Pozzoleone (VI) (IT)
(72) Inventor: PETTENON, Paolo, 35013 CITTADELLA (PD) (IT); PIEROBON, Marco, 35138 PADOVA (IT); CARRARO, Federico, 35030 RUBANO (PD) (IT)
(74) Representative: Locas, Davide

(57) **Abstract**

Environmental control device (1) for aquariums (6), ponds, or terrariums comprising: a casing (5); an environmental control means (2), adapted to control an environmental condition of the aquarium (6), pond, or terrarium; and an NFC communication device (3) configured to communicate with an external unit (4). The external unit (4) is configured to exchange data with the NFC communication device (3) so as to monitor and/or control an operating parameter of the environmental control means (2) or an operating condition of the environmental control means (2) or an environmental condition of the aquarium (6), pond or terrarium.

## Description

The present invention relates to a heating device for aquariums and, more generally, an environmental control device for aquariums, ponds or terrariums, and an associated environmental control system.

In order to maintain the ecological balance in an aquarium, pond, or terrarium, a plurality of environmental control devices must be used. In the case of aquariums, depending on the type of aquarium, whether with freshwater or salt water, and depending on the type of fish and the number of existing plants, a different number of environmental control devices will need to be installed in the tank. An environmental control device for aquariums, ponds, or terrariums (hereinafter also abbreviated as control device) may, for example, be a heater, a pump, a lighting device, and so on.

The control device allows to control an environmental condition of the aquarium, pond, or terrarium by varying an operating parameter associated with said control device. For example, for an aquarium heater, one of the controllable operating parameters may be the intensity of heat provided by said heater; for a pump, one of the controllable operating parameters may be the angular speed of the impeller; for a lamp, one of the controllable operating parameters may be the light intensity, the colour temperature, and so on.

It is generally possible to control an operating parameter of a control device for aquariums, ponds or terrariums by, for example, an analogue command placed on a casing of said device and operated directly by the user. For example, the heat intensity provided by an aquarium heater may be controlled by a rotatable command. Such control may have limitations due to the lack of precision with which a user can act on said rotatable command.

Therefore, control devices for aquariums, ponds or terrariums that may be adjusted by a digital command have been introduced. While on the one hand said digital commands prove to be more accurate than the analogue ones, on the other hand they often prove to be more expensive than the latter since it may often be necessary to integrate a small screen on the control device to be adjusted in order to be able to display the values that are going to be modified by means of said digital command.

The presence of commands to be operated directly on the control device for aquariums, ponds or terrariums may also cause problems related to the tightness of said devices. For example, when the control device is intended for aquariums, water seepage may occur due to the presence of analogue or digital commands that do not allow a perfect tightness of the outer casing of said device.

Some control devices for aquariums, ponds or terrariums are defined as "smart". Such control devices may be adjusted by a mobile device, such as a smartphone, a tablet, a laptop, and so on. It is thereby possible to ensure the tightness of said control devices since there is no need to integrate analogue or digital commands on the outer casing of the control device.

For this purpose, communication devices between a mobile device and a control device using technologies such as Bluetooth or Wi-Fi are mainly used in the state of the art. However, such communication devices involve using complex and expensive components. Another problem with such communication devices is that connection operations between mobile device and control device may be slow and complex.

An object of the invention is to provide an environmental control device for aquariums, ponds or terrariums and an associated environmental control system that overcome the problems reported with reference to the above-mentioned prior art.

An object of the invention is to provide a control device for aquariums, ponds, or terrariums that is particularly simple and cost-effective.

Another object of the invention is to provide an environmental control system for aquariums, ponds, or terrariums that allows a quick and easy connection between the control device and an external unit.

These and other objects are at least partially solved by a heating device for aquariums, ponds or terrariums having the characteristics of claim 1 and an associated temperature control system according to claim 12.

According to a further aspect of the invention, an environmental control device for aquariums, ponds or terrariums comprising a casing, an environmental control means and an NFC communication device is provided.

Preferably, the casing is configured so as to protect the control device. Specifically, said casing has the function of protecting the control device from shocks, certain environmental conditions of the aquarium, pond or terrarium, and so on.

Advantageously, the environmental control means is adapted to control an environmental condition of the aquarium, pond, or terrarium.

Preferably, the NFC communication device is configured to communicate with an external unit, and said external unit is configured to exchange data with the NFC communication device so as to monitor and/or control an operating parameter of the environmental control means or an operating condition of the environmental control means or an environmental condition of the aquarium, pond, or terrarium.

Advantageously, the NFC communication device and the external unit communicate with each other in such a way that the external unit can receive information related to an operating parameter or operating condition of the environmental control means or related to an environmental condition of the aquarium, pond, or terrarium. Preferably, the external unit provides the NFC communication device with information adapted to vary said operating parameter of the environmental control means or said operating condition of the environmental control means or said environmental condition of the aquarium, pond or terrarium. Preferably, by varying an operating parameter of the environmental control means, it is possible to change a relative operating condition of said environmental control means so as to control a relative environmental condition of the aquarium, pond or terrarium.

In other words, through interaction, that is, through communication and/or data exchange, between the NFC communication device and the external unit, it is advantageously possible to monitor and/or control an operating parameter of the environmental control means or an operating condition of the environmental control means or an environmental condition of the aquarium, pond or terrarium.

Advantageously, the external unit is configured as a mobile device, such as a smartphone, tablet, laptop, and so on.

Advantageously, the external unit comprises an NFC unit adapted to communicate with the NFC communication device of the control device.

NFC communication device refers to a communication device that uses NFC technology, or near-field communication (NFC), also called proximity communication. It is a transceiver technology that provides short-range two-way wireless (RF, or radio frequency) connectivity. Unlike simpler RFID (Radio Frequency Identification) devices, an NFC communication device allows two-way communication: when two devices using NFC technology are brought closer within a given range, usually a few centimetres, a peer-to-peer network is created between the two and both can send and receive information to and from each other.

Advantageously, the NFC communication device comprises a microchip and an antenna. Preferably, the NFC communication device can interface with the NFC unit of the external unit so that control device and external unit can send and receive information between each other.

Preferably, the NFC communication device acts as an intermediary between the external unit and the control device. For example, a user can advantageously set a value of the operating parameter or operating condition of the environmental control means or a value of an environmental condition of the aquarium, pond or terrarium through an application installed on the external unit. Then, the user can advantageously bring said external unit closer to the control device so as to fall within the range of the NFC communication device and transmit information about said desired value to it. Preferably, said information may contain a single command or a package of commands. Such a range may advantageously be extended to about 10cm.

The NFC communication device has the advantage of being much cheaper than a communication device using Wi-Fi or Bluetooth. This price difference may be such that the NFC communication device costs as much as ten times less than a communication device using Wi-Fi or Bluetooth.

Advantageously, communication and data exchange between the NFC communication device and the external unit can take place both when the environmental control device is supplied by the electrical grid or by power supply or by battery as well as when the environmental control device is not supplied by means of an electrical grid or by a power supply or by a battery.

Preferably, in case the environmental control device is supplied by means of an electrical grid or by a power supply or by a battery, the electronics on board that device is in operation and therefore the NFC communication device and the external unit can communicate.

Advantageously, in case the environmental control device is not supplied by means of an electrical grid or by a power supply or by a battery, the NFC communication device and the external unit can equally communicate through the antenna of the NFC communication device. Such operation with no power supply through the electrical grid allows the environmental control device to be handled by a user in a safe condition. This makes it also possible to comply with the safety standards of the Low Voltage Directive (LVD) 2014/35/EU and subsequent revisions.

Preferably, the antenna allows it to pick up energy from the external unit and use that energy to supply the NFC communication device of the environmental control device, enabling communication between the NFC communication device and the external unit. Preferably, after receiving said energy the antenna is able to transmit an electrical signal. Said energy is advantageously used to activate the microprocessor of the NFC communication device of the environmental control device.

Preferably, said energy from the external unit comprises electromagnetic waves. Such energy may advantageously be provided when, for example, the external unit is configured as a mobile device.

Preferably, both the environmental control device and the external unit comprise respective NFC communication devices. Advantageously, both said communication devices comprise a respective antenna and a respective microprocessor. Preferably, at least one of said NFC communication devices must be supplied by an electrical grid or by a power supply or by a battery to enable communication between the NFC communication device and the external unit. For example, if the environmental control device is not supplied by an electrical grid or by a power supply or by a battery, the external unit must advantageously be supplied by an electrical grid or by a power supply or by a battery, such as by a battery in case said external unit is a smartphone or tablet, to enable communication between the NFC communication device and the external unit. Preferably, the control device comprises a sensor adapted to measure an operating parameter of the environmental control means or to measure an operating condition of the environmental control means or to measure an environmental condition of the aquarium, pond or terrarium.

In a first embodiment, the environmental control device may be configured as a heating device or a cooling device.

Preferably, the heating device may, for example, be configured as an immersion heater for an aquarium or pond, or a mat heater for a terrarium, such as for a reptile house. Advantageously, the cooling device may be configured as an immersion cooler for an aquarium or pond, or a mat cooler for a terrarium, such as a reptile house.

The environmental control means of the heating device may advantageously be configured as an electrical resistance or other heat-emitting means. The environmental control means of the cooling device may advantageously be configured as a coolant of a refrigeration system.

Advantageously, the heating device or cooling device comprises a temperature sensor adapted to measure the temperature of the heating device or cooling device and/or the temperature of the aquarium, pond, or terrarium. Preferably, aquarium, pond or terrarium temperature refers to the water temperature of the aquarium or pond, or the air temperature inside the terrarium, respectively.

Preferably, an operating parameter associated with the heating device may be the power or intensity of the heat output by the latter. Preferably, an operating parameter associated with said cooling device may be the power or intensity of the heat absorbed by the latter. An operating condition of the heating device or cooling device may be an indication of the temperature at which said heating device is. Said operating condition may advantageously affect an environmental condition of the aquarium, pond, or terrarium, namely, in this case, the temperature of the aquarium, pond, or terrarium. Preferably, the higher the heating device temperature, the higher the temperature of the aquarium, pond or terrarium will be and vice versa. Advantageously, the lower the cooling device temperature, the lower the temperature of the aquarium, pond or terrarium will be and vice versa. Preferably, the heating device or the cooling device may comprise a thermostat adapted to maintain the temperature of said device or said aquarium, pond or terrarium constant.

Preferably, another operating parameter associated with the heating device or cooling device may be to provide or not provide power supply to the heating device or cooling device.

An operating condition of the heating device or cooling device may advantageously be its on or off condition. Said operating condition may advantageously affect an environmental condition of the aquarium, pond, or terrarium, namely, in this case, the temperature of the aquarium, pond, or terrarium. Preferably, the longer the heating device remains on, the higher the temperature of the aquarium, pond or terrarium will be, and vice versa. Advantageously, the longer the cooling device remains on, the lower the temperature of the aquarium, pond or terrarium will be, and vice versa. Preferably, the heating device or cooling device comprises a timer adapted to indicate and/or control how long the heating device or cooling device remains on and how long it remains off.

The heating device object of the invention enables to achieve a more effective temperature control than a heating device with a mechanical adjustment. In fact, the latter often comprises a rotatable element that may be operated manually and is therefore difficult to adjust accurately. In addition, said rotatable element may cause tightness problem, especially in relation to water seepage when the heating device is immersed in an aquarium or in a pond.

Preferably, the heating device or cooling device that is the subject of the invention may be completely immersed in the water of an aquarium or pond with no risk of water seepage since its casing is completely sealed.

The heating device or cooling device that is the subject of the invention is also cheaper than a heating device or cooling device that employs a digital control system, since it does not require associated accessories, such as a display.

The heating device or cooling device that is the subject of the invention, including the NFC communication device, is also cheaper than a heating device or cooling device that employs a communication device using Wi-Fi or Bluetooth.

In a second embodiment, the environmental control device is configured as a lighting device.

Preferably, the lighting device may, for example, be configured as a lamp or a ceiling light. In this case, the environmental control means may advantageously be configured as a LED or other light-emitting means.

Advantageously, the lighting device comprises a light sensor adapted to measure the intensity of the light emitted by the lighting device and/or the intensity of the light present in the aquarium, pond, or terrarium. Preferably, the lighting device may comprise a sensor adapted to measure the power provided to said lighting device. Advantageously, the lighting device may comprise a sensor adapted to monitor an on or off condition of the lighting device. Advantageously, the lighting device may comprise a sensor that can monitor the colour temperature of the lighting device.

Preferably, an operating parameter associated with the lighting device may be the power provided to the latter. Advantageously, it is possible to control whether or not power is provided to the lighting device and/or the intensity of said provided power.

Preferably, an operating parameter associated with the lighting device may be the colour temperature of the lighting device. Colour temperature advantageously refers to a physical quantity associated with the shade of the light. Advantageously, only one shade corresponds to each temperature.

An operating condition of the lighting device may be an indication of the light intensity output by said lighting device and/or the power intensity provided to said lighting device. Said operating condition may advantageously affect an environmental condition of the aquarium, pond, or terrarium, namely, in this case, the brightness of the aquarium, pond, or terrarium. In fact, the higher the light intensity of the lighting device and/or the power intensity provided to said lighting device, the higher the brightness of the aquarium, pond or terrarium will be, and vice versa.

An operating condition of the lighting device may advantageously be its on or off condition. Said operating condition may advantageously affect an environmental condition of the aquarium, pond, or terrarium, namely, in this case, the brightness of the aquarium, pond, or terrarium. In fact, when the lighting device is on the aquarium, pond or terrarium is lit, and vice versa. Preferably, the lighting device comprises a timer adapted to indicate and/or control how long said lighting device remains on and how long it remains off.

An operating condition of the lighting device may be an indication of the colour temperature of said lighting device.

Said operating condition may advantageously affect an environmental condition of the aquarium, pond, or terrarium, namely, in this case, the brightness of the aquarium, pond, or terrarium.

Advantageously, the lighting device that is the subject of the invention may also be fully immersed in the water of an aquarium or pond with no risk of water seepage since its casing is completely sealed.

The lighting device that is the subject of the invention is also cheaper than a lighting device that employs a digital control system because it does not require associated accessories, such as a display.

The lighting device that is the subject of the invention, by including an NFC communication device, is also cheaper than a lighting device that employs a communication device using Wi-Fi or Bluetooth.

In a third embodiment, the environmental control device is configured as a pump, in particular an aquarium or pond pump.

Preferably, the pump may, for example, be configured as a delivery pump or a movement pump.

Advantageously, a delivery pump refers to a pump adapted to return to the aquarium water that has descended into a sump of said aquarium. The sump may be preferably configured as an additional tank that may be installed at the bottom of the aquarium tank. Delivery pumps may advantageously be of the immersion or dry type. Dry-operating pumps should preferably be installed outside the sump and connected thereto through a watertight fitting. Immersion pumps are advantageously housed directly in the sump below the vertical of the delivery pipe.

The NFC communication device is advantageously placed inside a casing of the delivery pump. Preferably, said casing is completely sealed.

Advantageously, movement pump refers to a pump adapted to create water movement in aquariums or ponds. This may advantageously serve to: air out the environment; simulate tides as in nature; feed invertebrates and corals by evenly spreading the feed; remove dirt from the bottom, if mounted and/or directed towards the bottom of the tank; and so on.

The NFC communication device is advantageously placed inside a casing of the movement pump. Preferably, said casing is completely sealed.

In case the environmental control device is configured as a pump, the environmental control means may advantageously be an impeller of said pump.

Preferably, an operating parameter associated with the pump may be the power provided to an electric motor associated with the pump impeller.

An operating condition of the pump may be an indication of the angular speed of the impeller. Said operating condition may advantageously affect an environmental condition of the aquarium or pond, namely, in this case, a flow rate of water being moved into the aquarium or pond. In fact, the higher the angular speed of the pump impeller, the greater the flow rate of water that is moved into the aquarium or pond will be, and vice versa. Preferably, another operating parameter associated with the pump may be to provide or not provide power supply to said pump.

An operating condition of the pump may advantageously be its on or off condition. Said operating condition may advantageously affect an environmental condition of the aquarium or pond, namely, in this case, the flow rate of water being moved into the aquarium or pond. In fact, when the pump is on it moves a certain amount of water into the aquarium or pond, and vice versa. Preferably, the pump comprises a timer adapted to indicate and/or control how long the pump stays on and how long it stays off.

For example, it is possible to set a lower number of revolutions of the impeller during night hours to achieve a particularly quiet operation of the pump.

For example, a maximum power value and a minimum power value may be set at certain time intervals so as to obtain a water game. In order to obtain a similar water game in the state of the art, an external device connected to the Wi-Fi and Bluetooth network may be advantageously used, which is therefore more complicated and expensive. Preferably, such an external device operates at 24Volt.

The pump that is the subject of the invention may be completely immersed in the water of an aquarium or pond with no risk of water seepage since it has a completely sealed casing.

The pump that is the subject of the invention is also cheaper than a pump that employs a digital control system because it does not require associated accessories, such as a display.

The pump that is the subject of the invention, by including an NFC communication device, is also cheaper than a pump that employs a communication device using Wi-Fi or Bluetooth.

In a further embodiment, the environmental control device may be configured as a filtration system, particularly for aquariums or ponds.

Preferably, the filtration system comprises a casing, filtering means and a pump. Advantageously, water is conveyed through the pump so that it flows through the filtering means. It is thereby advantageously possible to filter the water from impurities, for example. Preferably, the filtration system comprises a clogging sensor adapted to detect the clogging level of the filtering means.

Preferably, the filtration system may be configured as an internal filtration system or an external filtration system.

Advantageously, an internal filtration system refers to an environmental control device immersed inside the aquarium or pond water.

Preferably, an external filtration system refers to an environmental control device placed outside the aquarium or pond water. Advantageously, the external filtration system may be connected to the aquarium or pond water via a delivery duct, through which the filtered water flows, and a return duct, through which the water to be filtered flows. Preferably, the external filtration system may comprise a heating device and/or a cooling device.

The NFC communication device is advantageously placed inside the casing of the filtration system. Preferably, said casing is completely sealed, particularly in the case of an internal filtration system.

Regarding possible operating parameters of the environmental control means and operating conditions of the environmental control means and environmental conditions of the aquarium, pond, or terrarium, in case the environmental control device is configured as a filtration system, similar considerations may be made as those described above for an environmental control device configured as a pump, since such filtration systems comprise a pump. In addition, in case the filtration system also comprises a heating device and/or a cooling device, similar considerations may be made for these parameters, operating conditions, and environmental conditions as described above for an environmental control device configured as a heating device and/or a cooling device. Preferably, another possible operating condition of an environmental control device configured as a filtration system may be an indication of the clogging level of the filtration means. Said operating condition can advantageously affect an environmental condition of the aquarium or pond, that is, in this case, the level of cleanliness of the aquarium or pond water. Preferably, the lower the clogging level of the filter, the higher the level of cleanliness of the aquarium or pond water will be, and vice versa.

Preferably, the internal filtration system that is the subject of the invention may be completely immersed in the water of an aquarium or pond with no risk of water seepage because its casing is completely sealed.

The filtration system that is the subject of the invention is also cheaper than a filtration system that employs a digital control system because it does not require associated accessories, such as a display.

The filtration system that is the subject of the invention, by including NFC communication device, is also cheaper than a filtration system that employs a communication device using Wi-Fi or Bluetooth.

Preferably, the NFC communication device is placed inside the casing of the environmental control device.

By placing the NFC communication device inside the casing it is possible to obtain advantages including: limiting the footprint of the control device; protecting the NFC communication device from shocks and certain environmental conditions in an aquarium, pond, or terrarium; and simplifying wiring in case the NFC communication device is installed on a control device cable. Preferably, the environmental control device may be fully immersed in the aquarium or pond water.

Advantageously, the outer casing comprises a plurality of portions connected to each other, such as by welding, by threaded connections, and so on.

Preferably, the environmental control device comprises a feedback device.

Preferably, the feedback device is positioned on the casing of the control device.

Advantageously, the feedback device provides a feedback of the change occurred in an operating parameter or operating condition of the environmental control means or an environmental condition of the aquarium, pond, or terrarium.

Advantageously, said change occurs after the NFC communication device has received instructions from the external unit.

Preferably, the feedback device may comprise a lighting element. In this case, the feedback may advantageously be a light signal, such as a flashing light that ends when the operating parameter is varied.

Preferably, the feedback device may comprise a sound generator. In this case, the feedback may advantageously be a sound signal that is emitted when the operating parameter is varied.

In some embodiments, the feedback device may comprise both the lighting element and the sound generator.

According to another aspect of the invention, an environmental control system for aquariums, ponds or terrariums is provided comprising the environmental control device according to the invention and an external unit. Advantageously, said external unit comprises a video interface configured so as to allow monitoring and/or controlling an operating parameter of the environmental control means or an operating condition of the environmental control means or an environmental condition of the aquarium, pond, or terrarium.

Advantageously, the NFC communication device and the external unit communicate with each other in such a way that the external unit can receive information related to an operating parameter or operating condition of the environmental control means or related to an environmental condition of the aquarium, pond or terrarium. Preferably, the external unit provides the NFC communication device with information adapted to vary said operating parameter of the environmental control means or said operating condition of the environmental control means or said environmental condition of the aquarium, pond or terrarium. Preferably, by varying an operating parameter of the environmental control means, it is possible to change a relative operating condition of said environmental control means so as to control a relative environmental condition of the aquarium, pond or terrarium.

Preferably, the external unit is configured as a mobile device. For example, said external unit may be configured as a smartphone, tablet, laptop, and so on.

Advantageously, the external unit comprises an NFC unit adapted to communicate with the NFC communication device of the control device.

Advantageously, the external unit comprises a screen, a microprocessor, and an operating system.

Preferably, the operating system may, for example, be iOS, Android, Windows, and so on. An application comprising the video interface is advantageously installed on the operating system.

Preferably, the application comprises an identification function that identifies the control devices within the range of the NFC communication device installed thereon.

Once a control device has been identified, the user may advantageously monitor and/or control via a video interface an operating parameter or an operating condition of the environmental control means of the identified control device or an environmental condition of the aquarium, pond, or terrarium.

Preferably, when the user selects an identified control device, the application allows the user to choose between two main options, namely read and modify.

Advantageously, the read option allows to detect an operating parameter or an operating condition of the environmental control means of the identified environmental control device means or an environmental condition of the aquarium, pond or terrarium. This information is advantageously forwarded to the external unit where it may be viewed on the screen via the application.

Preferably, the modify option allows to modify, by means of the NFC communication device, an operating parameter or an operating condition of the environmental control means of the identified control device or an environmental condition of the aquarium, pond or terrarium . Advantageously, the NFC communication device of the control device receives a command from the external unit. Preferably, said command modifies an operating parameter or an operating condition of the environmental control means of the control device so as to obtain a desired value of the operating parameter or operating condition of the environmental control means of the identified control device or a desired value of the environmental condition of the aquarium, pond, or terrarium.

Preferably, the application displays said operating parameter or said operating condition or said environmental condition on the screen. Subsequently, the user may advantageously modify said operating parameter, said operating condition or said environmental condition by setting a desired value via the video interface of the external unit. Preferably, said video interface comprises input commands. Advantageously, said input commands are touch.

Preferably, once the NFC communication device receives the input of the desired value from the external unit, said NFC communication device communicates with a microprocessor of the control device so as to change an operating parameter of the environmental control means so as to obtain the desired value of the operating parameter or operating condition of the environmental control means of the control device or a desired value of the environmental condition of the aquarium, pond or terrarium.

Advantageously, once said desired value is reached, the control device can advantageously provide feedback to the user via its feedback device, if any.

Preferably, a single command or a plurality of commands may be sent via the external unit.

Advantageously, it is possible to organise commands at certain time intervals. Preferably, the application of the external unit application may comprise a clock and calendar through which a user can set which commands to provide and at what time period. For example, in case the control device is a pump, timed commands may be provided adapted to turn off the pump or reduce the revolution number of the impeller during night hours to limit noise and/or reduce energy consumption.

Preferably, the environmental control system that is the subject of the invention allows to manage a plurality of control devices. For example, it is possible to monitor and/or control both a heating device, a lighting device, and a pump by means of a single external unit. Advantageously, the environmental control system allows to control several types of control devices, not limited to those described in the present invention.

It will also be appreciated that the preferred aspects shown above may be applied to the different aspects of the present invention, particularly both in case the invention relates to a heating device and in case it relates more generally to an environmental control device for aquariums, ponds or terrariums.

The characteristics and advantages of the invention will become clearer from the detailed description of its preferred embodiments, shown by way of exemplary and non-limiting purposes, with reference to the appended drawings wherein:
Figure 1 represents an environmental control device configured as a heating device;
Figure 2 is a schematic view of the environmental control system that is the object of the invention;
Figure 3 represents an environmental control device configured as a lighting device;
Figure 4 represents an environmental control device configured as a pump;
Figures 5 and 6 represent screens of the video interface that can be viewed on an external unit communicating with the control device.

With reference to the Figures, an environmental control device for aquariums 6, ponds or terrariums is globally referred to by reference number 1.

The environmental control device 1 for aquariums 6, ponds or terrariums comprises: a casing 5, an environmental control means 2 and an NFC communication device 3.

Preferably, the casing 5 is configured so as to protect the control device 1. Specifically, said casing 5 has the function of protecting the control device 1 from shocks and/or certain environmental conditions of the aquarium 6, pond or terrarium, and so on.

Advantageously, the environmental control means 2 is adapted to control an environmental condition of the aquarium 6, pond, or terrarium.

Preferably, the NFC communication device 3 is configured to communicate with an external unit 4 and said external unit 4 is configured to exchange data with the NFC communication device 3 so as to monitor and/or control an operating parameter of the environmental control means 2 or an operating condition of the environmental control means 2 or an environmental condition of the aquarium 6, pond or terrarium.

Advantageously, the NFC communication device 3 and the external unit 4 communicate with each other in such a way that the external unit 4 may receive information related to an operating parameter or operating condition of the environmental control means 2 or related to an environmental condition of the aquarium 6, pond or terrarium. Preferably, the external unit 4 provides the NFC communication device 3 with information adapted to vary said operating parameter of the environmental control means 2 or said operating condition of the environmental control means 2 or said environmental condition of the aquarium 6, pond or terrarium. Preferably, by varying an operating parameter of the environmental control means 2 it is possible to change a relative operating condition of said environmental control means 2 so as to control a relative environmental condition of the aquarium 6, pond or terrarium.

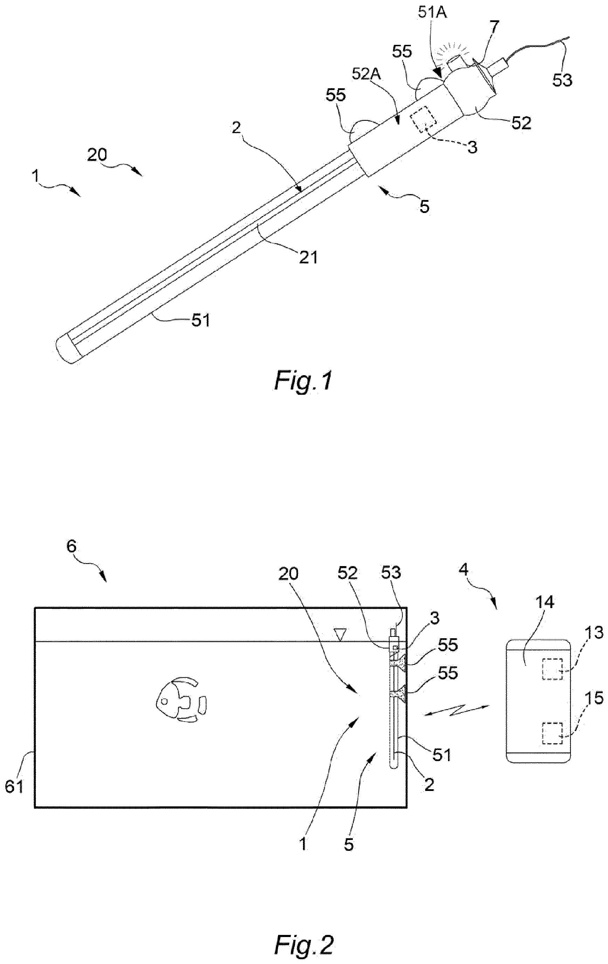

Advantageously, the external unit 4 is configured as a mobile device, such as the smartphone shown in Figure 2.

Advantageously, the external unit 4 comprises an NFC unit 13 adapted to communicate with the NFC communication device 3 of the control device 1.

Advantageously, the NFC communication device comprises a microchip and an antenna. Preferably, the NFC communication device 3 can interface with the NFC unit 13 of the external unit 4 so that the control device 1 and external unit 4 can send and receive information to each other.

Preferably, the NFC communication device 3 acts as an intermediary between the external unit 4 and the control device 1. For example, a user may advantageously set a value of the operating parameter or operating condition of the environmental control means 2 or a value of an environmental condition of the aquarium 6, pond or terrarium by means of an application installed on the external unit 4. Then, the user may advantageously bring said external unit 4 closer to the control device 1 so as to fall within the range of the NFC communication device 3 and transmit the information about said desired value to it. Preferably, said information may contain a single command or a package of commands. Such a range may advantageously be extended to about 10cm.

Preferably, the control device 1 comprises a sensor adapted to measure an operating parameter of the environmental control means 2 or to measure an operating condition of the environmental control means 2 or to measure an environmental condition of the aquarium 6, pond or terrarium.

In a first embodiment, shown in Figure 1, the environmental control device 1 is configured as a heating device 20 in particular as an immersion heater for an aquarium 6.

In this case, the environmental control means 2 may advantageously be configured as an electrical resistance 21.

Advantageously, the heating device 20 comprises a temperature sensor adapted to measure the temperature of the aquarium 6, pond, or terrarium.

Preferably, an operating parameter associated with said heating device 20 may be the power output or the heat intensity provided by the latter.

An operating condition of the heating device 20 may be in this case an indication of the temperature at which said heating device 20 is. Said operating condition may advantageously affect the temperature of the water contained in a tank 61 of the aquarium 6. In fact, the higher the heating device temperature 20, the higher the temperature of the water contained in the tank 61 of the aquarium 6 will be, and vice versa. Preferably, the heating device 20 may comprise a thermostat adapted to maintain constant the temperature of said heating device 20 or of the water contained in the tank 61 of the aquarium 6.

Preferably, another operating parameter associated with said heating device 20 may be to provide or not provide power supply to said heating device 20.

An operating condition of the heating device 20 may in this case be advantageously its on or off condition. Said operating condition may advantageously affect the temperature of the water contained in the tank 61 of the aquarium 6. In fact, the longer the heating device 20 remains on, the higher the temperature of the water contained in the tank 61 of the aquarium 6 will be, and vice versa. Preferably, the heating device 20 comprises a timer adapted to indicate and/or control how long said heating device 20 remains on and how long it remains off.

The heating device 20 preferably has the casing 5 completely sealed. Advantageously, the heating device 20 may be fully immersed in the water of the tank 61 of the aquarium 6.

Preferably, the casing 5 of the heating device 20 comprises a first portion 51 and a second portion 52. Preferably, said portions 51, 52 may be connected together by coupling, interlocking and/or gluing.

Advantageously, said first portion 51 is configured as a test tube adapted to contain the environmental control means 2. Preferably, the test tube is made of glass or polymeric material. Advantageously, the test tube is transparent. Preferably, the test tube has a tubular shape, even more preferably with a circular cross-section. More generally, the first portion 51 may have an elongated shape.

In some embodiments, the second portion 52 is configured so as to close said first portion 51 at one of its open ends 51A. Preferably, said second portion 52 comprises a closing element adapted to close one end of said test tube.

Advantageously, the second portion is connected to a cable 53 that provides power supply to the control device 1. Preferably, the first portion 51 contains a microprocessor that communicates with the NFC communication device 3. Advantageously, said microprocessor receives instructions from the NFC communication device 3 and acts on the environmental control means 2 so as to implement said received instructions. Advantageously, a support element 52A may be provided, e.g., attachable to said first portion 51, configured so as to attach at least one suction cup 55 adapted to connect the heating device 20 to a wall of the tank 61 of the aquarium 6. Preferably, the support element 52A comprises at least two suction cups 55.

The NFC communication device 3 is advantageously placed inside the casing 5 of the heating device 20.

Advantageously, the first portion 51, in case it has an elongated shape, comprises therein, in sequence, the electrical resistance 21, and a control unit including the microprocessor and the NFC communication device 3. In preferred embodiments, the NFC communication device 3 is placed at one end of the test tube, preferably of the open end. It is thereby possible to place the NFC communication device 3 close to the free water surface of the aquarium, thus making it easier to bring the external unit closer to the NFC communication device 3.

Preferably, the NFC communication device 3 is placed in the second portion 52 of the casing 5.

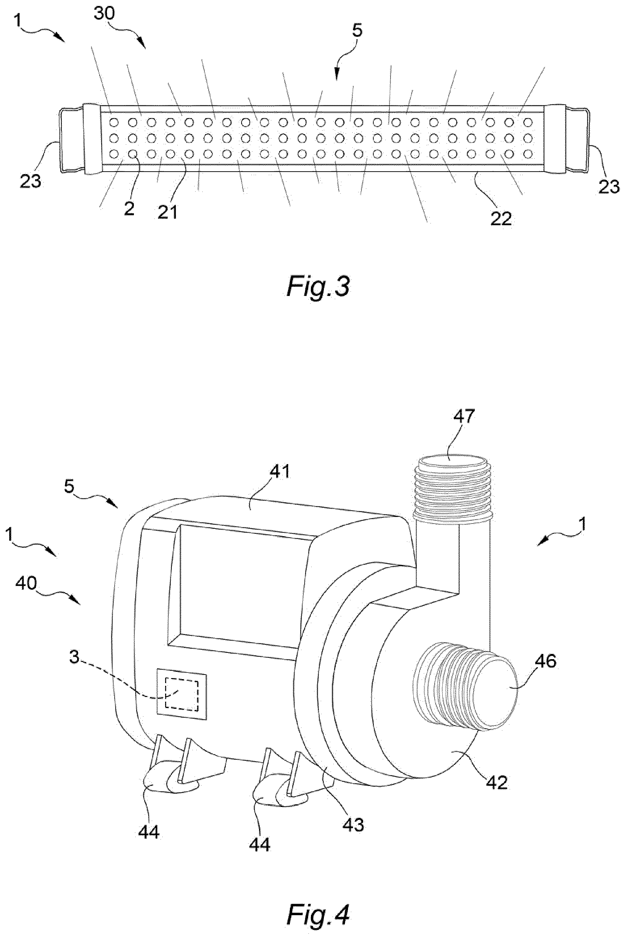

In a second embodiment, shown in Figure 3, the environmental control device 1 may be configured as a lighting device 30 specifically as a ceiling light.

In this case, the environmental control means 2 may advantageously be configured as a LED, preferably a plurality of LEDs.

Advantageously, the lighting device 30 comprises a sensor adapted to measure the power provided to said lighting device 30.

Preferably, an operating parameter associated with said lighting device 30 may be the power provided to the lighting device 30. Advantageously, the power provided may be metered as a percentage of a maximum power that may be provided to said lighting device 30.

An operating condition of the lighting device 30 may be an indication of the colour temperature of said lighting device 30. Said operating condition may advantageously affect the brightness of the aquarium 6, pond or terrarium. In fact, depending on the colour temperature of the lighting device 30, the brightness and/or temperature of the aquarium 6, pond, or terrarium may change.

Preferably, another operating parameter associated with said lighting device 30 may be to provide or not provide power supply to said lighting device 30.

An operating condition of the lighting device 30, in this case, may advantageously be its on or off condition. Said operating condition may advantageously affect the brightness of the aquarium 6, pond or terrarium. In fact, when the lighting device 30 is on, the aquarium 6, the pond or terrarium is lit, and vice versa. Preferably, the lighting device 30 comprises a timer adapted to indicate and/or control how long said lighting device 30 remains on and how long it remains off.

The lighting device 30 advantageously has the casing 5 fully sealed.

The NFC communication device 3 is advantageously placed inside the casing 5 of the lighting device 30.

Preferably, the casing 5 of the lighting device 30 comprises a support 21, a plate 22 and support elements 23.

Advantageously, the LEDs 2 are mounted on the support 21. Preferably, the support 21 is configured as a cooling fin. Advantageously, said fin is made of metal, even more preferably of aluminium.

Preferably, the support 21 is embedded in the plate 22. Advantageously, the plate 22 is made of polymeric material, even more advantageously of plexiglass. Preferably, the plate 22 is used to protect the LEDs. Advantageously, the plate 22 is for operating passive cooling channels, particularly in case the lighting device 30 does not have any type of fan or other types of active cooling devices.

Preferably, the support elements 23 are connected to opposite ends of the plate 22. Advantageously, said support elements 23 rest on an upper portion of the tank 61 of the aquarium 6. The lighting device 30 is thereby placed above said tank 61.

In alternative embodiments, the lighting device 30 may also be hung via cables, ropes and/or cords, above the tank 61 of the aquarium 6.

In a third embodiment, shown in Figure 4, the environmental control device 1 may be configured as a delivery pump 40 (hereinafter abbreviated as pump 40) for aquariums 6. In this case, the environmental control means 2 may advantageously be the impeller of the pump 40.

Preferably, an operating parameter associated with the pump 40 may be the power provided to an electric motor associated with the impeller of the pump 40.

An operating condition of the pump 40 in this case may be an indication of the angular speed of the impeller. Said operating condition may advantageously affect a flow rate of water that is moved into the aquarium 6. In fact, the higher the angular speed of the pump impeller 40, the greater the flow rate of water that is moved into the aquarium 6 will be, and vice versa.

Preferably, another operating parameter associated with the pump 40 may be to provide or not provide power supply to said pump 40.

An operating condition of the pump 40 in this case may advantageously be its on or off condition. Said operating condition may advantageously affect the flow rate of the water that is moved into the aquarium 6. In fact, when the pump 40 is turned on it moves a certain amount of water into the aquarium 6, and vice versa. Preferably, the pump 40 comprises a timer adapted to indicate and/or control how long the pump 40 remains on and how long it remains off.

For example, it is possible to set a lower number of revolutions of the impeller during night hours to achieve a particularly quiet operation of the pump 40 .

Preferably, the casing 5 of the pump 40 comprises a first element 41 and a second element 42. Preferably, said elements 41, 42 are connected to each other by a connecting element 43.

Advantageously, the first element 41 is configured as a pump body. Advantageously, the pump body is substantially box-shaped. Preferably, the pump body is adapted to contain an electric motor connected to a shaft which is in turn connected to the impeller of the pump 40. Preferably, the pump body comprises support elements 44 adapted to hold the pump 40 in place within the aquarium 6.

Preferably, the second element 42 is configured as a conveying element. Advantageously, said conveying element is adapted to contain the impeller of the pump 40. Preferably, the conveying element comprises an inlet conduit 46 and an outlet conduit 47, which are adapted to let water into and let water out of the pump 40, respectively.

Advantageously, the connecting element 43 is configured as a locking ring. Advantageously, said locking ring makes it possible to connect a protuberance of the pump body to the conveying element.

The pump 40 advantageously has the casing 5 fully sealed. Preferably, a gasket element is present between the first portion 41 and the second portion 42 of the casing 5 of the pump 40.

The NFC communication device 3 is advantageously placed inside the casing 5 of the pump 40. Preferably, the NFC communication device 3 is placed inside the first element 41 of the casing 5.

Preferably, the environmental control device 1 comprises a feedback device 7.

Preferably, the feedback device 7 is positioned on the casing 5 of the control device 1.

The feedback device 7 is particularly useful in alerting the user of a change occurred in an operating parameter or operating condition of the environmental control means 2 or an environmental condition of the aquarium 6, pond, or terrarium.

Advantageously, the feedback device 7 provides feedback of a change occurred in an operating parameter or operating condition of the environmental control means 2 or an environmental condition of the aquarium 6, pond, or terrarium.

Advantageously, said change occurs after the NFC communication device has received instructions from the external unit 4.

The feedback device 7 may comprise a lighting element, as shown in Figure 1. In this case, the feedback may advantageously be a light signal, such as a flashing light that ends when the operating parameter is varied. Advantageously, the lighting element may be placed on the second portion 52 of the control device 1 when the latter is configured as a heating device 20.

According to another aspect of the invention, an environmental control system 100 for aquariums 6, ponds or terrariums is provided comprising the environmental control device 1 and the external unit 4.

Advantageously, said external unit 4 comprises a video interface 11 configured to allow monitoring and/or controlling an operating parameter of the environmental control means 2 or an operating condition of the environmental control means 2 or an environmental condition of the aquarium 6 , pond, or terrarium.

Advantageously, the NFC communication device 3 and the external unit 4 communicate with each other in such a way that the external unit 4 may receive information related to an operating parameter or operating condition of the environmental control means 2 or related to an environmental condition of the aquarium 6, pond or terrarium. Preferably, the external unit 4 provides the NFC communication device 3 with information adapted to vary said operating parameter of the environmental control means 2 or said operating condition of the environmental control means 2 or said environmental condition of the aquarium 6 , pond or terrarium. Preferably, by varying an operating parameter of the environmental control means 2 it is possible to change a relative operating condition of said environmental control means 2 so as to control a relative environmental condition of the aquarium 6, pond or terrarium.

Preferably, the external unit 4 is configured as a mobile device. For example, said external unit 4 may be configured as a smartphone, as shown in Figure 2.

Advantageously, the external unit 4 comprises an NFC unit 13 adapted to communicate with the NFC communication device 3 of the control device 1.

Advantageously, the external unit 4 comprises a screen 14, a microprocessor 15 and an operating system. Preferably, the operating system may, for example, be iOS, Android, Windows, and so on. An application comprising the video interface 11 is advantageously installed on the operating system.

Preferably, the application comprises an identification function that identifies the control devices 1 within the range of the NFC communication device 3 installed thereon.

Once a control device 1 has been identified, the user can advantageously monitor and/or control via a video interface 11 an operating parameter or operating condition of the environmental control means 2 of the identified control device 1 or an environmental condition of the aquarium 6 or terrarium.

Preferably, when the user selects an identified control device 1, the application allows the user to choose between two main options, namely read and modify.

Advantageously, the read option allows to detect an operating parameter or operating condition of the environmental control means 2 of the identified environmental control device 1 or an environmental condition of the aquarium 6, pond or terrarium. This information is advantageously forwarded to the external unit 4 where it can be viewed on the screen 14 through the application.

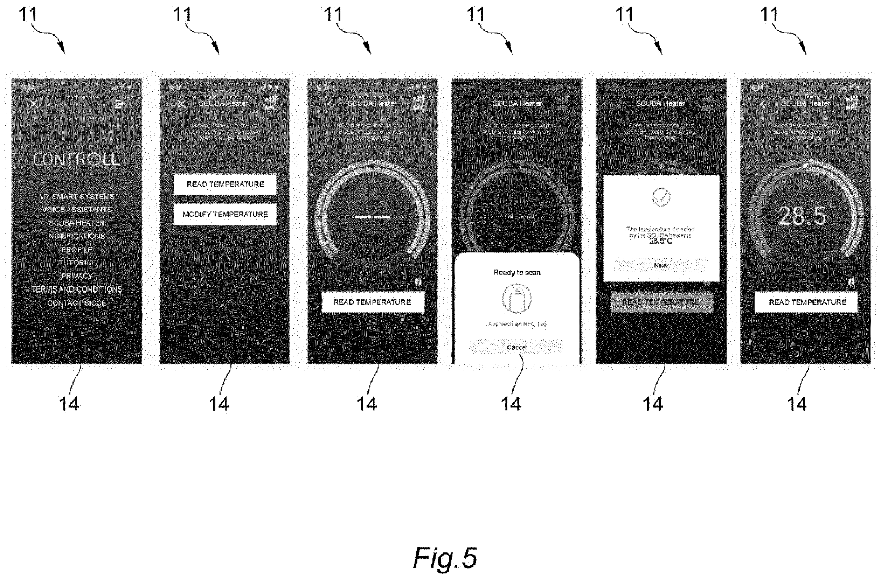

For example, in the case of Figure 5, the user may select the "read temperature" option via the graphic interface 11. Advantageously, said temperature is that of the water contained in the tank 61 of the aquarium 6 and thus represents an environmental condition of the aquarium 6. Preferably, said temperature is measured by a sensor placed on the control device 1. The application will then provide an indication that the external unit 4 is ready to receive information about said temperature measurement when the external unit 4 is brought closer to the control device 1, i.e., when the NFC unit 13 of the external unit 4 is brought within the range of the NFC communication device 3 of the control device 1. Once the external unit 4 is brought within said range, the NFC communication device 3 and the external unit 4 communicate with each other in such a way that the latter receives the information about said temperature from the former. At this point, the application displays the value of said temperature on the screen 14.

Preferably, the modify option allows to modify an operating parameter or operating condition of the environmental control means 2 of the identified environmental control device 1 or an environmental condition of the aquarium 6, pond or terrarium. Advantageously, the NFC communication device 3 of the control device 1 receives a command from the external unit. Preferably, said command modifies an operating parameter or operating condition of the environmental control means 2 of the control device 1 so as to obtain a desired value of the operating parameter or operating condition of the environmental control means 2 of the control device 1 or a desired value of the environmental condition of the aquarium 6, pond, or terrarium.

Preferably, the application displays on the screen 14 said operating parameter or said operating condition or said environmental condition. Subsequently, the user may advantageously modify said operating parameter, said operating condition or said environmental condition by setting a desired value via the video interface 11 of the external unit 4. Preferably, said video interface 11 comprises input commands. Advantageously, said input commands are touch.

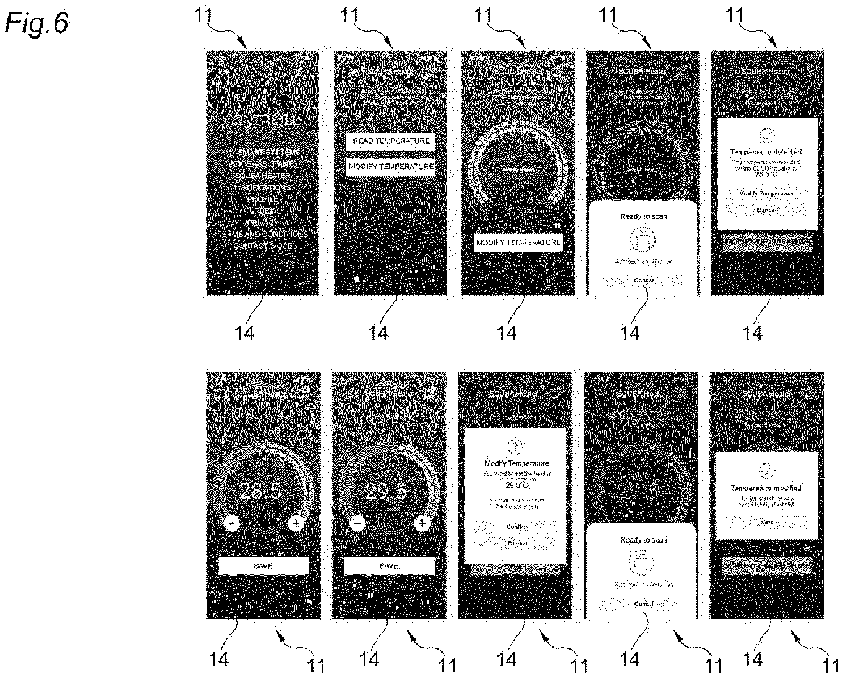

For example, in the case in Figure 6, the user may select the "modify temperature" option via the graphic interface 11. Advantageously, said temperature is that of the water contained in the tank 61 of the aquarium 6 and thus represents an environmental condition of the aquarium 6. Preferably, said temperature is measured by a sensor placed on the control device 1. The application will then provide an indication that the external unit 4 is ready to receive information about said temperature measurement when the external unit 4 is brought closer to the control device 1, i.e., when the NFC unit 13 of the external unit 4 is brought within the range of the NFC communication device 3 of the control device 1. Once the external unit 4 is brought within said range, the NFC communication device 3 and the external unit 4 communicate with each other in such a way that the latter receives the information about said temperature from the former. At this point, the application displays the value of said temperature on the screen 14. The user may then modify said temperature by means of input commands configured as touch commands on the screen 14 of the external unit 4. Once the desired temperature has been selected, the user may confirm it by an additional input command, such as a confirmation touch command. The application will then provide an indication that the external unit 4 is ready to send the desired temperature information when the external unit 4 is brought closer to the control device 1, i.e., when the NFC unit 13 of the external unit 4 is brought within the range of the NFC communication device 3 of the control device 1. Once the external unit 4 is brought within said range, the NFC communication device 3 and the external unit 4 communicate with each other in such a way that the latter provides the former with the information about said desired temperature. At this point, the application displays a message on the screen 14 confirming that the temperature has been modified.

Preferably, once the NFC communication device 3 receives the input of the desired value from the external unit 4, said NFC communication device 3 communicates with a microprocessor of the control device 1 so as to modify an operating parameter of the environmental control means 2 so as to obtain the desired value of the operating parameter or operating condition of the environmental control means 2 of the control device 1 or a desired value of the environmental condition of the aquarium 6, pond or terrarium.

Advantageously, once said desired value is reached, the control device 1 may advantageously provide a feedback to the user via its feedback device 7.

Preferably, it is possible to send a single command or a plurality of commands by the external unit 4.

Advantageously, it is possible to organise commands at certain time intervals. Preferably, the application of the external unit 4 may comprise a clock and calendar through which a user can set which commands to provide and at what time period. For example, in case the control device is a pump, timed commands may be provided adapted to turn off the pump or reduce the revolution number of the impeller during night hours to limit noise and/or reduce energy consumption.

Preferably, the environmental control system 100 that is the object of the invention allows to manage a plurality of control devices 1. For example, it is possible to monitor and/or control both a heating device 20 and a lighting device 30 and a pump 40 by means of a single external unit 4.

The invention thus solves the proposed problem while achieving a plurality of benefits. In particular, the environmental control device 1 for aquariums 6, ponds or terrariums turns out to be particularly simple and cost-effective, especially because of the NTC communication device 3 installed thereon. In addition, the associated environmental control system 100 for aquariums 6, ponds, or terrariums allows a quick and easy connection between the control device 1 and the external unit 4.

## Claims

1. Heating device (20) for aquariums (6) comprising:
a casing (5) completely sealed;
a heat-emitting means (2) adapted to control the temperature of the water in the aquarium (6), pond or terrarium; and
an NFC communication device (3) placed inside the casing (5) and configured to communicate with an external unit (4),
said external unit (4) being configured to exchange data with the NFC communication device (3) so as to monitor and/or control an operating parameter of the heat-emitting means (2) and/or an operating condition of the heat-emitting means (2) so as to control the temperature of the water contained in the aquarium (6).

2. Heating device (20) according to the preceding claim, wherein said casing (5) comprises a first portion (51) and a second portion (52), wherein said first portion (51) has an elongated shape and said second portion (52) is configured so as to close said first portion (51) at an open end (51A) of said first portion (51).

3. Heating device (20) according to the preceding claim, wherein said first portion (51), comprises therein, in sequence, said heat-emitting means (2) and a control unit including a microprocessor and said NFC communication device (3), said NFC communication device (3) being located at said open end of said first portion (51).

4. Heating device (20) according to any one of the preceding claims, wherein said operating parameter associated with said heating device (20) comprises the power output or the heat intensity provided by the latter.

5. Heating device (20) according to any one of the preceding claims, wherein said operating condition of the heating device (20) comprises an on or off condition thereof.

6. Heating device (20) according to any one of the preceding claims, comprising a temperature sensor adapted to measure the temperature of the aquarium (6).

7. Heating device (20) according to any one of the preceding claims, comprising a timer adapted to indicate and/or control how long said heating device (20) remains on and how long it remains off.

8. Heating device (20) according to any one of the preceding claims, wherein the heat-emitting means (2) comprises an electrical resistance (21).

9. Heating device (20) according to the preceding claim, wherein the NFC communication device (3) comprises an antenna that allows to pick up energy from the external unit (4) and use that energy to supply the NFC communication device (3), enabling communication and data exchange between the NFC communication device (3) and the external unit (4) even when the environmental control device (1) is not supplied by an electrical grid or by a power supply or by a battery.

10. Heating device (20) according to any one of the preceding claim, comprising a feedback device (7).

11. Heating device (20) according to any one of the preceding claim, comprising a support element (52A), preferably connected to said first portion (51), configured to attach at least one suction cup (55) adapted to connect the heating device (20) to a wall of the aquarium (6).

12. Temperature control system (100) for aquariums (6) comprising a heating device (20) according to any one of the preceding claims and an external unit (4) comprising a video interface (11) and an NFC unit (13) adapted to communicate with the NFC communication device (3) of the heating device (20) so as to exchange data between said external unit (4) and said heating device (20) so as to monitor and/or control an operating parameter of the heat-emitting means (2) and/or an operating condition of the heat-emitting means (2) so as to control the temperature of the water contained in the aquarium (6), said video interface (11) comprising input commands configured so as to change said operating parameter, said operating condition or said environmental condition by setting a desired value thereof.

13. Temperature control system (100) according to the preceding claim, wherein the external unit (4) comprises an operating system on which an application is installed which includes the video interface.

14. Temperature control system (100) according to the preceding claim, wherein the external unit (4) comprises a screen (14), said application being configured to display on said screen (14) said operating parameter or said operating condition or said environmental condition.

15. Temperature control system (100) according to any one of claims 12 to 14, wherein the external unit (4) is configured as a mobile device.
